# FASCICULE DE BREVET EUROPEEN

(11) **EP 1 209 338 B1**
(45) Date de publication et mention de la délivrance du brevet: **01.02.2006**
(21) Numéro de dépôt: 01402959.9
(22) Date de dépôt: 19.11.2001
(51) Int. Cl.: F02C 9/26, F02C 7/232

(54) **Dispositif doseur à réglage optimisé**
Dosiervorrichtung mit optimierter Einstellung
Dosing device having an optimized setting

(30) Priorité: 21.11.2000 FR 0015005
(43) Date de publication de la demande: 29.05.2002
(73) Titulaire: HISPANO SUIZA, 92707 Colombes Cedex (FR)
(72) Inventeur: Lavie, Alain, 91330 Yerres (FR); Martelli, Stéphanie, 77000 Melun (FR); Michau, Marion, 94300 Vincennes (FR); Rodrigues, José, 77176 Nandy (FR); Tiepel, Alain, 77930 Chailly en Bière (FR)
(74) Mandataire: David, Alain

(56) Documents cités:
- US-A- 4 491 272
- US-A- 4 570 668
- US-A- 4 938 418
- US-A- 5 020 315
- US-A- 5 694 967

## Description

### Domaine de l'invention

La présente invention se rapporte au domaine général des dispositifs de réglage de débit de fluide et elle concerne plus particulièrement les injecteurs de combustible dans une chambre de combustion de turbomachine.

### Art antérieur

Le réglage du débit d'alimentation en combustible dans un turboréacteur ou un turbopropulseur (appelé dans la suite de la description turbomachine) est réalisé au niveau d'injecteurs qui sont conçus pour foumir un premier débit de combustible, dit principal, pendant une phase de démarrage de la turbomachine et une phase de fonctionnement à faible puissance, et un second débit de combustible, dit secondaire, pour les phases de fonctionnement ultérieures et jusqu'à la pleine puissance.

La demande de brevet français FR 2 540 186 illustre un exemple typique d'injecteur de combustible pour une turbomachine comportant d'une part une soupape d'arrêt dont le ressort est réglé de façon à s'ouvrir pour une pression d'alimentation du combustible correspondant à la phase de démarrage et rester ouverte au delà de cette pression déterminée, et, d'autre part, une soupape de dosage dont le ressort est réglé pour s'ouvrir pour une pression d'alimentation également prédéterminée, mais supérieure à la pression de démarrage, et rester ouverte au delà et donc jusqu'à la pression maximale d'utilisation. Dans cette seconde phase, le débit du combustible est réglé par des fentes usinées au niveau de la soupape de dosage et munies de sections de passage calculées pour suivre l'évolution progressive du débit selon une relation prédéterminée dépendant de la pression d'alimentation. La charge initiale du ressort définissant un premier seuil d'action de la soupape de dosage est réglée à l'aide d'une cale annulaire.

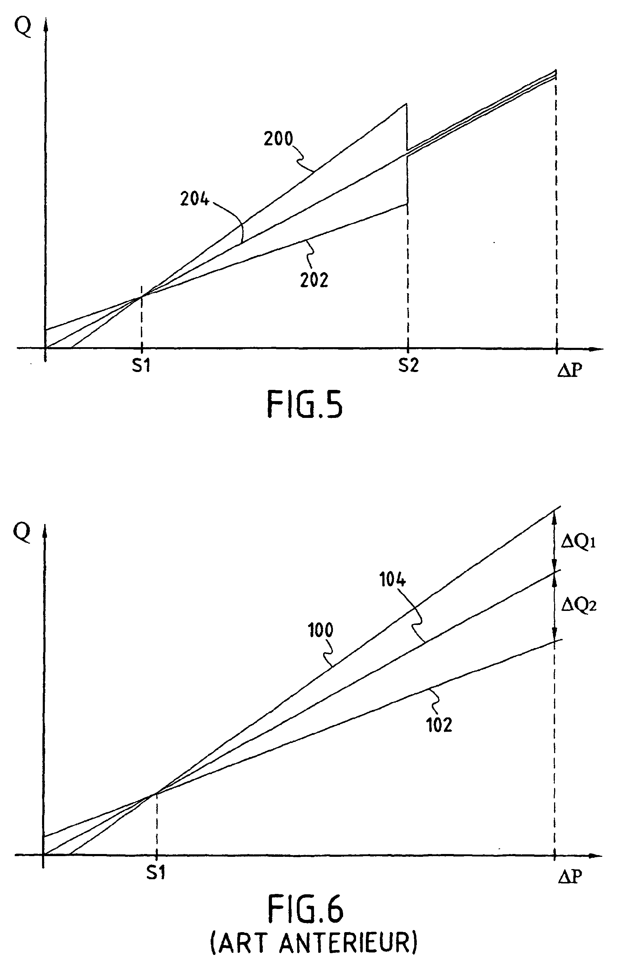

Cet art antérieur souffre toutefois d'un inconvénient majeur. En effet, le débit de combustible correspondant à l'ouverture maximale de la soupape de dosage (à la pleine puissance du moteur) dépend essentiellement des caractéristiques mécaniques du ressort et des sections de passage des fentes (les frottements de la soupape interviennent également mais dans une moindre mesure). Or, les tolérances existant dans la fabrication ou l'usinage tant du ressort que des fentes font que ce débit maximal ne peut pas être identique pour tous les injecteurs d'un moteur donné . La figure 6 montre les écarts de débit ΔQ₁, ΔQ₂ pouvant exister au niveau de deux injecteurs différents 100, 102 d'une même chambre de combustion par rapport à un débit théorique calculé 104. Il en résulte une grande hétérogénéité en débit entre injecteurs particulièrement préjudiciable à un bon fonctionnement de la turbomachine.

### Objet et définition de l'invention

La présente invention a donc pour objet un injecteur de combustible, qui permet de diminuer notablement l'hétérogénéité en débit entre les injecteurs d'une même chambre de combustion. Un but de l'invention est aussi de proposer un dispositif qui permette une simplification et une fiabilisation du réglage des débits d'injection de combustible dans la chambre de combustion pour chaque injecteur. Un autre but de l'invention est de proposer un dispositif qui permette en outre un gain de temps dans le réglage individuel de ces débits. Encore un but de l'invention est de proposer un dispositif susceptible de s'affranchir des frottements de la soupape de dosage de ces injecteurs.

Ces buts sont atteints par un injecteur de combustible pour chambre de combustion de turbomachine comprenant un corps d'injecteur ayant des moyens d'admission de combustible sous pression, une première soupape montée en aval desdits moyens d'admission de combustible sous pression et agissant en réponse à une pression prédéterminée d'admission de combustible pour admettre du combustible dans ledit corps d'injecteur, une seconde soupape montée en aval de ladite première soupape et agissant en réponse à une première pression déterminée de combustible (S1), supérieure à ladite pression d'admission, pour doser une partie du combustible admis dans ledit corps d'injecteur vers des moyens d'utilisation de ce combustible, le débit de combustible injecté vers lesdits moyens d'utilisation en deçà d'une seconde pression déterminée de combustible (S2), supérieure à ladite première pression, au delà de laquelle ladite seconde soupape se comporte comme un diaphragme fixe, étant fonction de sections de passage pratiquées au niveau de ladite seconde soupape, caractérisé en ce qu'il comporte en outre des moyens de réglage individuel de ladite seconde pression déterminée de combustible de façon à assurer à pleine puissance une homogénéité du débit d'injection de combustible dans la chambre de combustion.

Avec cette structure particulière, on évite, pour les forts régimes (au delà de la pression S2), la dispersion dans les caractéristiques de débit des moyens d'utilisation et on simplifie considérablement le réglage du débit maximal d'injection de combustible.

Avantageusement, les moyens de réglage comportent une butée pour limiter la course de ladite soupape de dosage à une valeur déterminée correspondant à une valeur maximale de débit d'injection de combustible désirée et cette butée de limitation de course comporte de préférence une bague fixée sur ladite soupape de dosage et destinée à coopérer avec un fourreau dans lequel peut se déplacer ladite soupape.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue en coupe illustrant un injecteur de combustible de turbomachine selon l'invention,
- les figures 2 à 4 sont des vues en coupe du dispositif doseur de l'injecteur de la figure 1 illustrant son mode de fonctionnement,
- la figure 5 est un graphique montrant un exemple de courbes de réglage de débit d'injection dans une turbomachine avec la mise en oeuvre de l'injecteur de combustible de la figure 1, et
- la figure 6 est un graphique montrant un exemple de courbes de réglage de débit d'injection dans une turbomachine de l'art antérieur.

### Description détaillée d'un mode de réalisation préférentiel

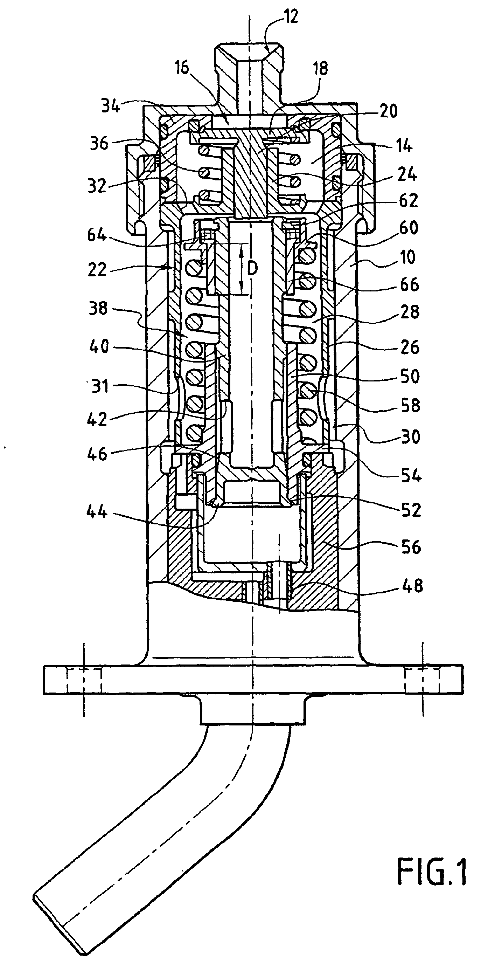

La figure 1 montre un injecteur de combustible d'une chambre de combustion de turbomachine. Cet injecteur qui peut être un injecteur dit « pilote » pour assurer l'allumage et fonctionnant alors en permanence ou un injecteur dit « de décollage » pour assurer les phases de croisière et alors pouvant être allumé ou éteint comporte, dans un corps d'injecteur 10, un orifice d'admission de combustible 12 destiné à recevoir le combustible sous pression d'une pompe à combustible appropriée (non représentée) et qui débouche dans une chambre d'entrée 14 d'écoulement de combustible de ce corps d'injecteur. Une soupape d'étanchéité 16 destinée à assurer l'étanchéité de l'injecteur à l'arrêt et formée classiquement d'une tête de soupape 18 et d'une tige de soupape 20 est montée dans cette chambre d'entrée de combustible et maintenue en position au moyen d'un manchon 22 dont une partie tubulaire centrale 24 forme support de soupape et qui comporte en outre une partie cylindrique périphérique 26, qui s'étend en aval depuis cette partie centrale sur une grande partie du volume interne restant du corps d'injecteur 10, et qui délimite une chambre intérieure de combustible secondaire 28 et une chambre annulaire de combustible principal 30 disposée autour de celle-ci et communiquant avec elle par des alésage transversaux 31. La chambre de combustible secondaire 28 est reliée à la chambre d'entrée de combustible 14 au travers d'alésages calibrés 32 percés régulièrement autour du support de soupape 24. Le siège de cette soupape est formé par un épaulement d'une chemise cylindrique 34 reposant sur le manchon 22 et un ressort hélicoïdal 36 est disposé entre le support de soupape 24 et la tête de soupape 18 pour permettre un réglage de la pression d'admission du combustible dans la chambre d'entrée au delà de laquelle la soupape d'étanchéité s'ouvrira (par exemple 1,5 kg/cm²).

Un dispositif doseur 38 destiné à doser le combustible s'écoulant depuis la chambre de combustible secondaire 28 est monté directement dans cette chambre et comprend tout d'abord une soupape de dosage 40 de forme tubulaire, pourvue d'alésages transversaux d'écoulement du combustible secondaire 42 et d'une extrémité fermée de laquelle émerge un épaulement circulaire 44 formant tête de soupape. Cette extrémité comporte également des fentes 46 qui sont conformées très précisément pour doser le combustible s'écoulant depuis la chambre de combustible secondaire 28, au travers des alésages transversaux 42, vers un canal d'éjection du combustible secondaire 48.

La soupape de dosage 40 peut coulisser dans un fourreau cylindrique 50 dont une extrémité comporte un évidemment circulaire 52 formant siège de soupape. Ce fourreau est maintenu fixement dans le corps d'injecteur 10 par l'intermédiaire d'un collet 54 qui est pincé entre l'extrémité du manchon 22 opposée au support de soupape 24 et une pièce 56 de support de ce fourreau. Le collet forme aussi une surface d'appui pour une première extrémité d'un ressort hélicoïdal 58 dont l'autre extrémité est montée dans un élément de retenue en forme de coupelle 60 enfilé sur l'extrémité de la soupape, opposée à la tête de soupape, et fixé à cette soupape tubulaire à l'aide d'une bague en C 62. Une cale annulaire 64 est disposée entre la bague en C et l'élément de retenue pour régler la charge du ressort 58 et définir un premier seuil S1 d'action de la soupape de dosage. Cette charge est choisi de manière à permettre à la soupape de dosage de s'ouvrir pour une pression de combustible prédéterminée (par exemple 10 kg/cm²), supérieure à celle assurant l'ouverture de la soupape d'étanchéité 16 et correspondant à la pression de démarrage, et rester ouverte sous l'augmentation de la pression d'alimentation (le débit fourni étant alors fonction des sections de passage des fentes 46).

Selon l'invention, le dispositif doseur 38 est en outre muni d'une butée de réglage destinée à définir un second seuil S2 d'action de la soupape de dosage identique pour tous les injecteurs d'une même chambre de combustion et au delà duquel la soupape se comporte comme un diaphragme fixe dont les caractéristiques sont alors totalement indépendantes des caractéristiques d'usinage du ressort ou des fentes comme des caractéristiques de frottement de la soupape. Cette butée variable permet de limiter la course de la soupape de dosage et donc le débit d'injection de combustible à une valeur maximale prédéterminée, correspondant à ce second seuil d'action, et identique pour tous les injecteurs.

La figure 5 montre bien l'effet de cette butée de réglage sur les écarts de débit pouvant exister, dans la plage de fonctionnement de la turbomachine, au niveau de deux injecteurs différents 200, 202 d'une même chambre de combustion par rapport à un débit théorique calculé 204. Cette butée peut être formée par exemple par une bague 66 montée sur l'extrémité de la soupape de dosage, opposée à la tête de soupape, et dont le réglage individuel (par un usinage de la longueur D de la bague) permet de définir pour chaque injecteur une pression de combustible prédéterminée commune et correspondant à un débit proche de la pleine ouverture (par exemple 30kg/cm²). On peut noter qu'il est tout aussi possible d'envisager de monter cette butée au niveau du fourreau 50 de façon qu'elle coopère avec l'élément de retenue 60 pour limiter la course de la soupape de dosage 40.

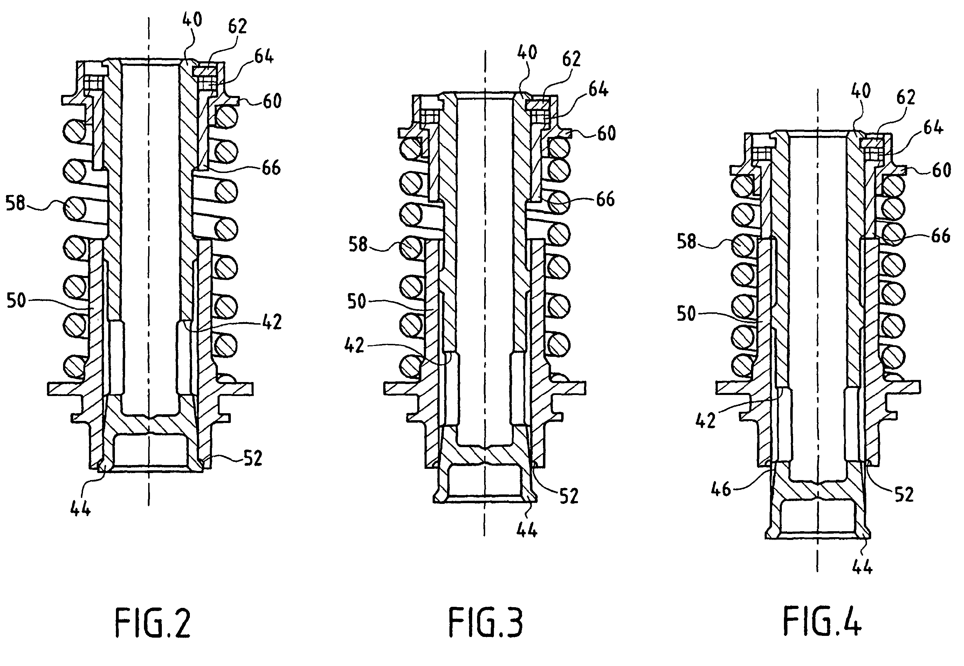

Le fonctionnement du dispositif doseur d'un l'injecteur de combustible selon l'invention sera maintenant explicité en regard des figures 2 à 4.

La figure 2 représente le dispositif doseur 38 en position initiale de repos, la soupape de dosage 40, fermée, reposant sur son siège 52. Le combustible secondaire n'alimente donc pas l'injecteur qui est alimenté par le seul combustible principal depuis la chambre d'entrée 14 en passant successivement par les alésages calibrés 32, la chambre secondaire 28 et les alésages transversaux 31 du manchon 22 (on suppose bien entendu la soupape d'étanchéité 16 ouverte).

Sur la figure 3, le dispositif doseur est dans une position intermédiaire dans laquelle, sous l'effet d'une pression d'alimentation supérieure à celle du seuil S1, le ressort 58 s'est comprimé provoquant une semi-ouverture de la soupape 40. Le combustible présent dans la chambre secondaire 28 pénètre alors dans cette soupape pour ressortir par ses alésages transversaux 42, et au travers des fentes 46, alimenter l'injecteur avec un flux secondaire de combustible qui va se combiner avec le flux de combustible principal précédent. Les sections de passage variables des fentes assurent le réglage du débit d'injection secondaire.

Enfin, la figure 4 illustre le dispositif doseur dans sa position d'ouverture maximale correspondant à une pression d'alimentation supérieure au seuil S2 et dans laquelle la soupape de dosage 40 est en butée, la bague 66 venant en contact à l'extrémité du fourreau 50 et interdisant tout déplacement supplémentaire de la soupape quelle que soit la pression d'alimentation en combustible. Dans cette position terminale réglable selon la valeur de D, les sections de passage des fentes ne sont plus variables et la soupape se comporte donc comme un diaphragme fixe (dont les caractéristiques de débit dépendent du seul dimensionnement de la bague) éliminant par là même tous les problèmes de dispersion de l'art antérieur.

Avec l'invention, on effectue un réglage du débit d'injection non seulement à l'ouverture de la soupape de dosage pour les faibles débits (seuil S1) mais aussi à pleine ouverture pour des débits beaucoup plus importants (seuil S2). Ce réglage à pleine ouverture est effectué individuellement pour chaque injecteur de façon à obtenir une pression de combustible identique au niveau de la chambre de combustion, quelles que soient les caractéristiques mécaniques individuelles et nécessairement différentes de chaque injecteur (notamment celle du ressort 58). Cette modification apparemment simple du dispositif doseur, par la simple adjonction d'une bague de réglage dont la longueur D sera différente d'un injecteur à l'autre et fonction des caractéristiques mécaniques individuelles de chaque injecteur, apporte une amélioration considérable dans le contrôle de l'hétérogénéité en débit entre injecteurs à pleine puissance puisqu'il n'est plus nécessaire de recourir à un usinage très précis de tous les constituants de l'injecteur pour obtenir un débit homogène, mais seulement de celui de la bague 66. En outre, l'adjonction de ce composant permet une plus grande fiabilisation dans le réglage du débit à doser comme un gain de temps de réglage, car ce réglage à pleine puissance ne dépend plus que d'un seul paramètre, le dimensionnement d'une bague-butée, et non de celui de sections de passage de fentes et de caractéristiques d'élasticité d'un ressort.

## Revendications

1. Injecteur de combustible pour chambre de combustion de turbomachine comprenant un corps d'injecteur (10) ayant des moyens (12) d'admission de combustible sous pression, une première soupape (16) montée en aval desdits moyens d'admission de combustible sous pression et agissant en réponse à une pression prédéterminée d'admission de combustible pour admettre du combustible dans ledit corps d'injecteur, une seconde soupape (40) montée en aval de ladite première soupape et agissant en réponse à une première pression déterminée de combustible (S1), supérieure à ladite pression d'admission, pour doser une partie du combustible admis dans ledit corps d'injecteur vers des moyens (48) d'utilisation de ce combustible, le débit de combustible injecté vers lesdits moyens d'utilisation en deçà d'une seconde pression déterminée de combustible (S2), supérieure à ladite première pression, au delà de laquelle ladite seconde soupape se comporte comme un diaphragme fixe, étant fonction de sections de passage (42) pratiquées au niveau de ladite seconde soupape, **caractérisé en ce qu'**il comporte en outre des moyens (66) de réglage individuel de ladite seconde pression déterminée de combustible de façon à assurer à pleine puissance une homogénéité du débit d'injection de combustible dans la chambre de combustion.

2. Injecteur de combustible selon la revendication 1, **caractérisé en ce que** lesdits moyens de réglage individuel comportent une butée (66) pour limiter la course de ladite seconde soupape à une valeur déterminée correspondant à une valeur maximale de débit d'injection de combustible désirée.

3. Injecteur de combustible selon la revendication 2, **caractérisé en ce que** ladite butée de limitation de course comporte une bague (66) fixée sur ladite seconde soupape et destinée à coopérer avec un fourreau (50) dans lequel peut se déplacer ladite seconde soupape.

4. Chambre de combustion de turbomachine comportant une pluralité d'injecteurs de combustible selon l'une quelconque des revendications 1 à 3.

## Patentansprüche

1. Kraftstoffeinspritzdüse für die Brennkammer einer Turbomaschine, umfassend einen Düsenkörper (10) mit Mitteln (12) zum Zuführen von unter Druck stehendem Kraftstoff, ein erstes Ventil (16), das den Mitteln zum Zuführen von unter Druck stehendem Kraftstoff nachgeschaltet ist und das auf einen vorbestimmten Druck für die Kraftstoffzufuhr reagiert, um Kraftstoff in den Düsenkörper einzulassen, ein zweites Ventil (40), das dem ersten Ventil nachgeschaltet ist und auf einen ersten bestimmten Kraftstoffdruck (S1) reagiert, der höher ist als der Zufuhrdruck, um einen Teil des in den Düsenkörper eingelassenen Kraftstoffs dosiert Mitteln (48) zur Verwendung dieses Kraftstoffs zuzuführen, wobei die Kraftstoff-Einspritzmenge, die diesen Verwendungsmitteln unterhalb eines zweiten bestimmten Kraftstoffdrucks (S2), der höher ist als der erste Druck und oberhalb dessen das zweite Ventil sich wie eine feste Membran verhält, zugeführt wird, abhängig ist von den Durchlaßquerschnitten (42) im Bereich des zweiten Ventils, **dadurch gekennzeichnet, daß** sie außerdem Mittel (66) zur individuellen Regelung des zweiten bestimmten Kraftstoffdrucks aufweist, so daß bei voller Leistung die Homogenität der in die Brennkammer eingespritzte Kraftstoff-Einspritzmenge gewährleistet wird.

2. Kraftstoffeinspritzdüse nach Anspruch 1, **dadurch gekennzeichnet, daß** die Mittel zur individuellen Regelung einen Anschlag (66) aufweisen, der den Hub des zweiten Ventils auf einen bestimmten Wert begrenzt, der einem Höchstwert für die gewünschte Kraftstoff-Einspritzmenge entspricht.

3. Kraftstoffeinspritzdüse nach Anspruch 2, **dadurch gekennzeichnet, daß** der Anschlag zur Hubbegrenzung einen Ring (66) aufweist, der am zweiten Ventil befestigt ist und mit einer Muffe (50), in der das zweite Ventil verschieblich gelagert ist, zusammenwirken soll.

4. Brennkammer einer Turbomaschine umfassend mehrere Kraftstoffeinspritzdüsen nach einem der Ansprüche 1 bis 3.

## Claims

1. A fuel injector for a turbomachine combustion chamber, the injector comprising an injector body (10) having means (12) for admitting fuel under pressure, a first valve (16) mounted downstream from said means for admitting fuel under pressure and responding to a predetermined fuel admission pressure to admit fuel into said injector body, a second valve (40) mounted downstream from said first valve and responding to a first determined fuel pressure S1, greater than said admission pressure to deliver a fraction of the fuel admitted into said injector body to fuel utilization means (48), the flow rate of fuel injected to said utilization means below a second determined fuel pressure S2, greater than said first pressure, above which said second valve behaves like a fixed diaphragm as a function of the flow sections (42) formed through said second valve, the injector being **characterised in that** it further comprises means (66) for individually adjusting said second determined fuel pressure so as to ensure at full power that fuel is injected at a uniform rate into the combustion chamber.

2. A fuel injector according to claim 1, **characterised in that** said individual adjustment means comprise an abutment (66) for limiting the stroke of said second valve to a determined value which corresponds to a maximum desired value for the flow rate of fuel injection.

3. A fuel injector according to claim 2, **characterised in that** said stroke-limiting abutment comprises a ring (66) fixed to said second valve and designed to co-operate with a bushing (50) in which said second valve can move.

4. A turbomachine combustion chamber comprising a plurality of fuel injectors according to any one of claims 1 to 3.
